(19) Europäisches Patentamt
European Patent Office
Office européen des brevets

(11) EP 4 461 759 A1

(12) **EUROPEAN PATENT APPLICATION**
published in accordance with Art. 153(4) EPC

(43) Date of publication:
**13.11.2024 Bulletin 2024/46**

(21) Application number: **23827392.4**

(22) Date of filing: **25.05.2023**

(51) International Patent Classification (IPC):
***C08G 18/18*** *(2006.01)* ***F25D 23/06*** *(2006.01)*
***F25D 23/02*** *(2006.01)* ***C08J 9/14*** *(2006.01)*
***C08G 101/00*** *(2006.01)*

(52) Cooperative Patent Classification (CPC):
**C08G 18/18; C08J 9/14; F25D 23/02; F25D 23/06**

(86) International application number:
**PCT/KR2023/007127**

(87) International publication number:
**WO 2023/249272 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.06.2022 KR 20220075202**
**25.08.2022 KR 20220107195**

(71) Applicant: **SAMSUNG ELECTRONICS CO., LTD.**
**Yeongtong-gu**
**Suwon-si, Gyeonggi-do 16677 (KR)**

(72) Inventors:
- **JUNG, Mingyu**
  **Suwon-si Gyeonggi-do 16677 (KR)**
- **PARK, Jongsung**
  **Suwon-si Gyeonggi-do 16677 (KR)**
- **KOH, Youngdeog**
  **Suwon-si Gyeonggi-do 16677 (KR)**
- **KIM, Jungchul**
  **Suwon-si Gyeonggi-do 16677 (KR)**
- **LIM, Jungsoo**
  **Suwon-si Gyeonggi-do 16677 (KR)**

(74) Representative: **Gulde & Partner**
**Patent- und Rechtsanwaltskanzlei mbB**
**Wallstraße 58/59**
**10179 Berlin (DE)**

# (54) URETHANE AND REFRIGERATOR COMPRISING SAME

(57) Disclosed are a urethane having improved thermal insulation performance by lowering thermal conductivity of the urethane and a refrigerator comprising the same.

The urethane according to an embodiment may comprise: a plurality of closed cells containing inside gas; a plurality of open cells connected to outside air; and cell walls disposed between at least one of the plurality of closed cells and at least one of the plurality of open cells or between the plurality of closed cells to connect the at least one of the plurality of closed cells with the at least one of the plurality of open cells or to connect the plurality of closed cells. Diameters of a closed cell of the plurality of closed cells and an open cell of the plurality of open cells may be 100 to 200 μm.

**FIG. 1**

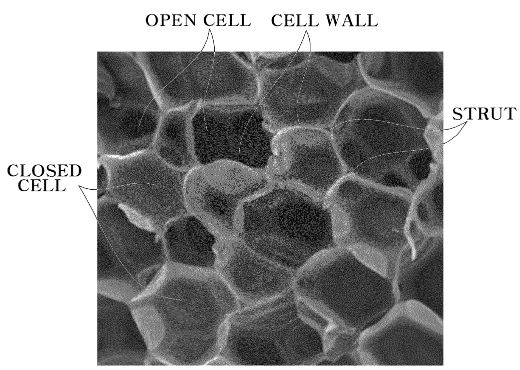


EP 4 461 759 A1

## Description

[Technical Field]

The present disclosure relates to a urethane and a refrigerator comprising the same.

[Background Art]

Urethane used as an adiabatic material is injected into a gap between a cabinet and a cavity of a refrigerator in a liquid phase and cured to constitute walls. The lowest thermal conductivity of adiabatic materials formed of conventional urethane is 20 mW/m K which cannot satisfy environmental regulations that are being strengthened.

[ DETAILED DESCRIPTION ]

[Technical Problem]

To increase thermal insulation effects of adiabatic materials, a method of increasing thickness of urethane has been used. However, in the case of increasing the thickness of urethane, problems such as an increase in size or a decrease in storage capacity occur in refrigerators.

Therefore, there is a need to develop a high-performance urethane having a lower thermal conductivity than those of conventional urethanes to satisfy environmental regulations and minimize inconvenience of consumers.

[Technical Solution]

In accordance with an aspect of the present disclosure, a urethane includes: a plurality of closed cells containing inside gas; a plurality of open cells connected to outside air; and cell walls disposed between at least one of the plurality of closed cells and at least one of the plurality of open cells or between the plurality of closed cells to connect the at least one of the plurality of closed cells with the at least one of the plurality of open cells or to connect the plurality of closed cells, wherein diameters of a closed cell of the plurality of closed cells and an open cell of the plurality of open cells are 100 to 200 μm.

A thermal conductivity $\lambda_{urethane}$ may be 18.0 to 20.5 mW/m·K. The urethane may comprise, in fraction by volume, 90% or more of the plurality of closed cells and a balance of the plurality of open cells. The gas may comprise cyclopentane (CP), air, and hydrofluoro-olefin (HFO). A density of the urethane is 30 to 35 $kg/m^3$. An average thickness of the cell walls may be 0.35 to 0.5 μm.

In accordance with another aspect of the present disclosure, a method of manufacturing a urethane comprises: forming a urethane polymer by reacting a polyol solution with isocyanate; and forming cells by adding a blowing agent and a foam stabilizer for cell formation. A catalyst may be used to control reaction rates of the urethane polymer-forming operation and the cell-forming operation. The polyol solution, the isocyanate, the blowing agent, the foam stabilizer, and the catalyst are comprised as follows: 100 parts by weight of the polyol solution, 100 to 120 parts by weight of the isocyanate, 30 parts by weight or less of the blowing agent, 1 to 3 parts by weight of the foam stabilizer, and 1 to 8 parts by weight of the catalyst are comprised based on the 100 parts by weight of the polyol solution.

To control the reaction rates, a cream time (CT) may be 3 to 10 seconds, and a gel time (GT) may be 20 to 60 seconds. The ratio of gel time (GT) to cream time (CT) may be 2 to 20. The polyol solution may comprise 20 to 80 parts by weight of an aromatic polyol solution and a balance of aliphatic polyols based on the 100 parts by weight of the polyol solution. The blowing agent may comprise at least one of cyclopentane (CP), hydrofluoro-olefin (HFO), and hydrofluorocarbon (HFC). The catalyst may comprise 1 to 3 parts by weight of the foaming catalyst, 1 to 3 parts by weight of the gelling catalyst, and a balance of the trimerization catalyst based on the 100 parts by weight of the polyol solution. The foaming catalyst may comprise at least one of pentamethyl diethylene triamine (PMDETA) and di-(N,N-dimethyl aminoethyl)ether (BDMEE). The gelling catalyst may comprise at least one of triethylamine (TEA), triethylenediamine (TEDA), pentamethylenediethylene triamine (PMDETA), dimethylcyclohexyl amine (DMCHA), and tetramethyl-n-hexyldiamine (TMHDA). The trimerization catalyst may comprise at least one of potassium otoate and TMR-2.

In accordance with another aspect of the present disclosure, a refrigerator comprises: an outer cabinet provided at an outermost side of the refrigerator; a cavity constituting inner walls of the refrigerator; and a urethane disposed between the cabinet and the cavity. The urethane may comprise a plurality of closed cells containing inside gas; a plurality of open cells connected to outside air; and cell walls disposed between at least one of the plurality of closed cells and at least one of the plurality of open cells or between the plurality of closed cells to connect the at least one of the plurality of closed cells with the at least one of the plurality of open cells or to connect the plurality of closed cells. Diameters of a closed cell of the plurality of closed cells and an open cell of the plurality of open cells may be 100 to 200 μm.

[Advantageous Effects]

To solve various problems including the above problems, provided are a urethane having improved thermal insulation performance by lowering thermal conductivity via urethane cell refinement conducted by controlling a reaction time of the urethane, and a refrigerator including the same.

[BRIEF DESCRIPTION OF THE DRAWINGS]

FIG. 1 is a scanning electron microscope (SEM) image of a cross-section of a urethane according to an embodiment.

FIG. 2 is a schematic diagram illustrating a cross-section of a refrigerator according to an embodiment.

[Modes of the Invention]

Hereinafter, embodiments of the present disclosure will be described in detail with reference to the accompanying drawings. These embodiments are provided to fully convey the concept of the present disclosure to those of ordinary skill in the art. The present disclosure may, however, be embodied in many different forms and should not be construed as limited to the exemplary embodiments set forth herein. In the drawings, parts unrelated to the descriptions are omitted for clear description of the disclosure and sizes of elements may be exaggerated for clarity.
Throughout the specification, the term "comprising" or "including" an element specifies the presence of the stated element, but does not preclude the presence or addition of one or more elements, unless otherwise stated.
An expression used in the singular encompasses the expression of the plural, unless otherwise indicated.
To solve various problems including the above problems, provided are a urethane having improved thermal insulation performance by lowering thermal conductivity via urethane cell refinement conducted by controlling a reaction time of the urethane, and a refrigerator including the same.
According to one embodiment, a urethane having improved thermal insulation performance by lowering thermal conductivity of the urethane via cell refinement conducted by controlling a reaction time and a refrigerator the same may be provided.
However, the effects achieved by the urethane and the refrigerator the same according to the embodiments of the present disclosure are not limited to those mentioned above, and any other effects not mentioned herein will be understood by those skilled in the art to which the present disclosure belong.
A urethane according to an embodiment may comprise a plurality of closed cells containing inside gas; a plurality of open cells connected to outside air; and cell walls disposed between the closed cells and the open cells or between the plurality of closed cells to connect the closed cells with the open cells or to connect the plurality of closed cells.
FIG. 1 is a scanning electron microscope (SEM) image of a cross-section of urethane according to an embodiment.
Referring to FIG. 1, the urethane according to an embodiment comprises a plurality of open cells, a plurality of closed cells, and cell walls.
The closed cells refer to closed pores containing inside gas generated while the urethane is foamed. The open cells refer to open pores failing to form closed cells and connected to outside air.
The cell walls refer to a structure disposed between the closed cells and the open cells or between the plurality of closed cells to connect the closed cells with the open cells or to connect the plurality of closed cells. In addition, a strut refers to a point at which three or more closed cells or open cells meet.
Diameters of a closed cells of the plurality of closed cells and an open cell of the plurality of open cells may be 100 to 200 μm.
Diameters of the closed cells and the open cells may be 100 to 200 μm.
Thermal conductivity of the urethane $\lambda_{urethane}$ determining thermal insulation performance of the urethane may be calculated using Equation (1) below.

$$\text{Equation (1): } \lambda_{urethane} = \lambda_{gas} + \lambda_{solid} + \lambda_{radiation} + \lambda_{convection}$$

The thermal conductivity of the urethane $\lambda_{urethane}$ may be calculated as a sum of a thermal conductivity of the inside gas $\lambda_{gas}$ contained in the closed cells, a thermal conductivity of the cell walls $\lambda_{solid}$, a thermal conductivity by radiant energy $\lambda_{radiation}$ generated throughout the cell walls and the inside gas, and a thermal conductivity of a convection current $\lambda_{convection}$ generated by circulation of the inside gas. However, the thermal conductivity of the convection current,

which is known to have little effects in the urethane, is not considered in calculation of the thermal conductivity of the urethane $\lambda_{urethane}$ in the present disclosure.

To lower the thermal conductivity of the urethane $\lambda_{urethane}$, the thermal conductivity of the inside gas $\lambda_{gas}$, the thermal conductivity of the cell walls $\lambda_{solid}$, and the thermal conductivity by radiant energy $\lambda_{radiation}$ should be lowered.

In the present disclosure, the thermal conductivity by radiant energy $\lambda_{radiation}$ is lowered by reducing the diameters of the cells, and the thermal conductivity of the inside gas $\lambda_{gas}$, and the thermal conductivity of the cell walls $\lambda_{solid}$ have similar values to those of the related art. That is, the $\lambda_{gas}$ may have a value of 14 to 15mW/m K, and the $\lambda_{solid}$ may have a value of 2.5 to 3.5 mW/m·K.

The thermal conductivity by radiant energy $\lambda_{radiation}$ may be represented by Equation (2) below.

Equation (2):

$$\lambda_{radiation} = \frac{16 \cdot \sigma \cdot T^3}{3 \cdot K}$$

In Equation (2), K may be represented by Equation (3) below.

Equation (3):

$$K = 4{,}10 \cdot \frac{\sqrt{\frac{f_s \cdot \rho_f}{\rho_z}}}{d} + \left[\frac{(1-f_s) \cdot \rho_f}{\rho_z}\right] \cdot K_w$$

In Equation (3), $f_s$ may be represented by Equation (4) below.

Equation (4):

$$f_s = 1 - \left(\frac{3.46 t \rho_s}{d \rho_f}\right)$$

In Equations (2) and (3) above, $\sigma$ represents Stefan-Boltzmann constant, T represents temperature, K represents extinction coefficient, $f_s$ represents strut fraction, $\rho_f$ represents density of foamed urethane, $\rho_s$ represents density of a solid-state, non-foamed urethane, d represents average diameter of closed cells, $K_w$ represents extinction coefficient of cell walls, and t represents average thickness of the cell walls.

Meanwhile, 5.6704 * $10^{-8}$ W/$m^2$·K is substituted for the Stefan-Boltzmann constant $\sigma$, 296 K is substituted for the temperature T, 1250 kg/$m^3$ is substituted for the $\rho_s$ (density of a solid-state, non-foamed urethane), and 60000 $m^{-1}$ is substituted for the $K_w$ (extinction coefficient of the cell walls) in the calculation.

The density $\rho_f$ of foamed urethane should be increased and the average diameter d of the closed cells should be reduced to lower the thermal conductivity by radiant energy $\lambda_{radiation}$. Also, the thermal conductivity by radiant energy $\lambda_{radiation}$ is calculated as an almost same value regardless of increases or decreases in the average thickness t of the cell walls.

Meanwhile, the average means an average of values measured at five random points in the present disclosure.

In the present disclosure, the thermal conductivity of the urethane is lowered by reducing the diameters of the closed cells and the open cells by optimizing the reaction rate. Particularly, by controlling a cream time (CT), a gel time (GT), and a GT/CT ratio, refinement of the closed cells and the open cells may be obtained.

The urethane according to an embodiment may have a thermal conductivity $\lambda_{urethane}$ of 18.0 to 20.5 mW/m·K. Preferably, the thermal conductivity $\lambda_{urethane}$ may be 18.0 to 20.0 mW/m·K, and more preferably, the thermal conductivity may be 18.0 to 19.0 mW/m K.

In addition, the urethane according to an embodiment may comprise, in fraction by volume, 90% or more of the plurality of closed cells and a balance of the plurality of open cells.

Meanwhile, the inside gas may comprise cyclopentane (CP), air, and hydrofluoro-olefin (HFO).

A density of the urethane may be 30 to 35 kg/$m^3$, and an average thickness of the cell walls may be 0.35 to 0.5 $\mu$m.

Upon calculation using Equation (1) above, while conventional urethanes have a thermal conductivity of 20 to 22 mW/m K, a thermal conductivity $\lambda_{urethane}$ of the urethane according to an embodiment of the present disclosure may be 18.0 to 20.5 mW/m-K. Therefore, as thermal insulation performance is improved by reducing the thermal conductivity

by 10% compared to conventional urethanes, energy-saving effects by 5% or more may be expected herein.

Hereinafter, a method of manufacturing urethane according to another embodiment of the present disclosure will be described.

A method of manufacturing urethane according to an embodiment comprises: forming a urethane polymer by reacting a polyol solution with isocyanate; and forming cells by adding a blowing agent and a foam stabilizer for cell formation, wherein a catalyst is used to control reaction rates of the urethane polymer-forming operation and the cell-forming operation, and the polyol solution, the isocyanate, the blowing agent, the foam stabilizer, and the catalyst may be comprised as follows: 100 parts by weight of the polyol solution, 100 to 120 parts by weight of the isocyanate, 30 parts by weight or less of the blowing agent, 1 to 3 parts by weight of the foam stabilizer, and 1 to 8 parts by weight of the catalyst may be comprised based on the 100 parts by weight of the polyol solution.

First, the urethane polymer is prepared via a reaction between isocyanate and polyol as shown in Reaction Scheme 1 below.

Reaction Scheme 1:

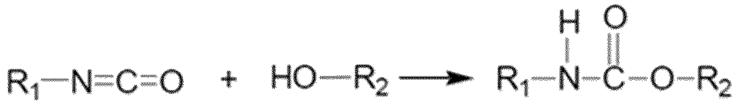

In addition, while the blowing agent is added to form inner pores, $H_2O$ is used as a co-blowing agent to assist foaming, and therefore $CO_2$ and an amine may be produced as shown in Reaction Scheme 2 below.

Reaction Scheme 2:

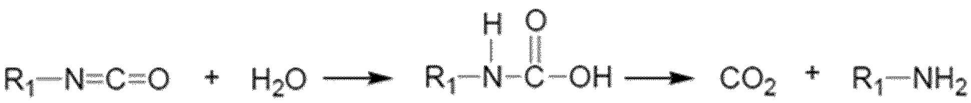

Meanwhile, the amine produced in Reaction Scheme 2 above is necessary in the following reaction, i.e., urea and biuret reaction. In the urea and biuret reaction, urea, biuret, and the like act as intermediate reactive groups to enhance physical binding strength of the urethane.

The polyol solution, the isocyanate, the blowing agent, the foam stabilizer, and the catalyst may be comprised as follows: 100 parts by weight of the polyol solution, 100 to 120 parts by weight of the isocyanate, 30 parts by weight or less of the blowing agent, 1 to 3 parts by weight of the foam stabilizer, and 1 to 8 parts by weight of the catalyst may be comprised based on the 100 parts by weight of the polyol solution.

The polyol solution and the isocyanate may be added at a ratio of 1: 1 to 1:1.2. In the case of using an excessive amount of the polyol solution, the polyol remains in a reaction process, resulting in an increase in density of final urethane and a decrease in production efficiency. On the contrary, in the case of using an excessive amount of the isocyanate, urethane considerably hardens, and cell refinement may not sufficiently occur.

The blowing agent plays a role in forming cells inside the urethane and the foam stabilizer plays a role in maintaining the formed cells via surfactant action. In the case of using excessive amounts of the blowing agent and the foam stabilizer, manufacturing costs may increase and productivity may decrease.

The catalyst plays a role in increasing or decreasing a reaction rate. An excess of the catalyst may decrease efficiency and raise manufacturing costs.

In the method of manufacturing urethane according to an embodiment, a cream time (CT) may be 3 to 10 seconds, a gel time (GT) may be 20 to 60 seconds, and a gel time(GT) / cream time(CT) ratio may be 2 to 20.

One of the core technologies of the present disclosure is cell refinement implemented by controlling the CT, GT and GT/CT ratio. In the present disclosure, the CT and the GT are measured using any method well known in the art.

CT refers to a period from a point at which foams start to form to a point at which color change of a reaction solution is visibly recognized as foams grow. In this regard, the point at which the color change is visibly recognized

refers to a point at which an $\Delta E$ value of the L*a*b* color space exceeds 1 in comparison with the color of the solution at the point where foams start to form.

GT refers to a period from a reaction start time of a reaction solution to a point where urethane fibers are formed and cured.

In response to a CT less than 3 seconds, urethane is quickly solidified to deteriorate flowability making it difficult to sufficiently fill the urethane. However, in response to a CT exceeding 10 seconds, it may be difficult to obtain desired thermal insulation performance of the urethane due to increased cell diameters. Preferably, the CT may be 3 to 7 seconds.

In response to a GT less than 20 seconds, flowability of the urethane decreases making it difficult to fill the inside of a refrigerator with urethane and resulting in an excessive increase in density. However, in response to a GT exceeding 60 seconds, cell diameters increase making it difficult to obtain desired thermal insulation performance of the urethane. Preferably, the GT may be 20 to 40 seconds.

In response to a GT/CT ratio less than 2, the density of the urethane excessively increases making it difficult to perform foaming. However, in response to a GT/CT ratio exceeding 20, the diameter of the cells increases making it difficult to obtain desired thermal insulation performance of the urethane. Preferably, the GT/CT ratio may be 4 to 10.

The polyol solution may comprise 20 to 80 parts by weight of an aromatic polyol solution, and a balance of aliphatic polyols based on the 100 parts by weight of the polyol solution.

Conventionally, although the aromatic polyols are added in an amount less than 20 parts by weight based on 100 parts by weight of the polyol solution, the amount of the aromatic polyols is increased to 20 to 80 parts by weight in the present disclosure to control the CT and the GT.

The blowing agent may comprise at least one of cyclopentane (CP), hydrofluoro-olefin (HFO), and hydrofluorocarbon (HFC).

The catalyst may comprise a foaming catalyst, a gelling catalyst, and a trimerization catalyst.

In the method of manufacturing a urethane according to an embodiment, the catalyst may comprise 1 to 3 parts by weight of the foaming catalyst, 1 to 3 parts by weight of the gelling catalyst, and a balance of the trimerization catalyst based on the 100 parts by weight of the polyol solution.

In the present disclosure, the catalyst may play a role in controlling the CT and the GT.

The foaming catalyst may control the CT by controlling foaming reaction between the isocyanate and water. The foaming catalyst may comprise at least one of pentamethyl diethylene triamine (PMDETA) and di-(N,N-dimethyl aminoethyl)ether (BDMEE).

The gelling catalyst may control the GT by controlling gelling reaction between the polyol and the isocyanate. The gelling catalyst may comprise at least one of triethylamine (TEA), triethylenediamine (TEDA), pentametylenediethylene triamine (PMDETA), dimethylcyclohexyl amine (DMCHA), and tetramethhyl-n-hexyldiamine (TMHDA).

The trimerization catalyst may play a role in controlling trimerization reaction in which 3 isocyanate molecules react to form isocyanurate. The trimerization catalyst may comprise at least one of potassium otoate and TMR-2.

Hereinafter, a refrigerator according to another embodiment of the present disclosure will be described.

The refrigerator according to an embodiment comprises: an outer cabinet; an inner cavity within the cabinet; and a urethane disposed between the cabinet and the inner cavity. The urethane comprises plurality of closed cells containing inside gas; a plurality of open cells connected to outside air; and cell walls disposed between at least one of the plurality of closed cells and at least one of the plurality of open cells or between the plurality of closed cells to connect the at least one of the plurality of closed cells with the at least one of the plurality of open cells or to connect the plurality of closed cells, wherein diameters of a closed cell of the plurality of closed cells and an open cell of the plurality of open cells are 100 to 200 $\mu$m.

The refrigerator according to an embodiment comprises: an outer cabinet disposed at an outermost side of the refrigerator; a cavity constituting inner walls of the refrigerator; and a urethane interposed between the cabinet and the cavity, wherein the urethane comprises a plurality of closed cells containing inside gas; a plurality of open cells connected to outside air; and cell walls disposed between the closed cells and the open cells or between the plurality of closed cells to connect the closed cells with the open cells or to connect the plurality of closed cells. Diameters of a closed cell of the plurality of closed cells and an open cell of the plurality of open cells may be 100 to 200 $\mu$m.

FIG. 2 is a schematic diagram illustrating a cross-section of a refrigerator according to an embodiment.

Referring to FIG. 2, the refrigerator according to an embodiment comprises a cabinet disposed at the outermost side, a cavity constituting inner walls of the refrigerator, and a urethane interposed between the cabinet and the cavity as an adiabatic material.

The outer cabinet may be made of steel and the inner cavity within the outer cabinet may be made of plastic.

The urethane may have a thermal conductivity $\lambda_{urethane}$ of 18.0 to 20.5 mW/m·K.

The urethane according to an embodiment may comprise, in fraction by volume, 90% or more of the plurality of closed cells and a balance of the plurality of open cells, and the inside gas may comprise cyclopentane (CP), air, and hydrofluoro-olefin (HFO).

In addition, a density of the urethane may be 30 to 35 kg/$m^3$, and an average thickness of the cell walls may

be 0.35 to 0.5 μm.

Hereinafter, the present disclosure will be described in more detail with reference to the following examples and comparative examples. However, the following examples are merely presented to exemplify the present disclosure, and the scope and effects of the present disclosure are not limited thereto.

Examples

Urethane samples were prepared using initial reaction solutions having composition ranges shown in Table 1 below. Units of the composition ranges of Table 1 below are based on 100 parts by weight of polyol solutions.

Table 1

| | Polyol solution | Isocy anate | Blowin g agent | Foam stabili zer | Catalyst | | | |
|---|---|---|---|---|---|---|---|---|
| | | | | | Foami ng | Gelli ng | Trimeriz ation | Total content of catalyst |
| Example 1 | 100 | 120 | 19 | 1.6 | 1.7 | 1.7 | 1.0 | 4.4 |
| Example 2 | 100 | 120 | 19 | 1.6 | 2.9 | 2.8 | 1.0 | 6.7 |
| Example 3 | 100 | 120 | 19 | 1.6 | 3.0 | 3.0 | 1.0 | 7.0 |
| Example 4 | 100 | 120 | 19 | 1.6 | 3.3 | 3.3 | 1.0 | 7.6 |
| Comparative Example 1 | 100 | 120 | 19 | 1.6 | 0.5 | 0.5 | 1.0 | 2.0 |
| Comparative Example 2 | 100 | 120 | 19 | 1.6 | 0.9 | 1.0 | 1.0 | 3.0 |

In Table 2 below, CT, GT, GT/CT ratio, cell diameter, and urethane density of each of the examples and comparative examples are shown. CT refers to a period from a point at which foams start to form to a point at which color change of a reaction solution is visibly recognized as foams grow. In this regard, the point at which the color change is visibly recognized refers to a point at which an ΔE value of the L*a*b* color space exceeds 1 in comparison with the color of the solution at the point where foams start to form. GT refers to a period from a reaction start time of a reaction solution to a point where urethane fibers are formed and withstand a light impact. Meanwhile, GT is measured based on SPI Gel Time.

The cell diameter of the samples was measured using a scanning electron microscope (SEM) image, and the density of urethane samples was measured by using a density meter at room temperature.

Table 2

| | CT (s) | GT (s) | GT/CT | Cell diameter (μm) | Urethane density ($kg/m^3$) |
|---|---|---|---|---|---|
| Example 1 | 5 | 40 | 8 | 187 | 34.0 |
| Example 2 | 5 | 35 | 7 | 183 | 31.9 |
| Example 3 | 7 | 34 | 4.9 | 175.1 | 33.4 |
| Example 4 | 3 | 27 | 9 | 165 | 34.4 |
| Comparative Example 1 | 20 | 100 | 5 | 360 | 33.6 |
| Comparative Example 2 | 11 | 55 | 5 | 250 | 33.7 |

Referring to Table 2, because the samples of Examples 1 to 4 satisfied the composition range of the reaction solution according to the present disclosure, the CT range of 3 to 10 seconds, the GT range of 20 to 60 seconds, and the GT/CT ratio of 2 to 20 were satisfied. Thus, Examples 1 to 4 satisfied the cell diameter range of 100 to 200 μm. That is, it may be seen that thermal insulation performance was improved in Examples 1 to 4 by lowering thermal conductivity via cell refinement. However, because the amounts of the foaming catalyst and/or the gelling catalyst of Comparative Examples 1 and 2 did not satisfy the range of 1 to 3, the CT range of 3 to 10 seconds, the GT range of 20 to 60 seconds, and the GT/CT ratio range of 2 to 20 were not satisfied. Therefore, the cell diameters of Comparative Examples 1 and 2 did not satisfy the range of 100 to 200 μm. That is, it may be seen that the thermal insulation performance was poor

in Comparative Examples 1 and 2 due to insufficient cell refinement. According to an embodiment, a urethane having improved thermal insulation performance by lowering thermal conductivity of the urethane via cell refinement conducted by controlling reaction time and a refrigerator comprising the same may be provided.

## Claims

1. A urethane comprising:

   a plurality of closed cells containing inside gas;
   cell walls disposed
   between at least one of the plurality of closed cells and at least one of the plurality of open cells or
   between the plurality of closed cells to connect the at least one of the plurality of closed cells with the at least one of the plurality of open cells or to connect the plurality of closed cells,
   wherein diameters of a closed cell of the plurality of closed cells and an open cell of the plurality of open cells are 100 to 200 μm.

2. The urethane according to claim 1, wherein a thermal conductivity $\lambda_{urethane}$ is from 18.0 to 20.5 mW/m K.

3. The urethane according to claim 1, wherein the urethane comprises, in fraction by volume, 90% or more of the plurality of closed cells and a balance of the plurality of open cells.

4. The urethane according to claim 1, wherein the inside gas comprises cyclopentane (CP), air, and hydrofluoro-olefin (HFO).

5. The urethane according to claim 1, wherein a density of the urethane is 30 to 35 $kg/m^3$.

6. The urethane according to claim 1, wherein an average thickness of the cell walls is from 0.35 to 0.5 μm.

7. A method of manufacturing a urethane, the method comprising:

   forming a urethane polymer by reacting a polyol solution with isocyanate; and
   forming cells by adding a blowing agent and a foam stabilizer for cell formation,
   wherein a catalyst is used to control reaction rates of the urethane polymer-forming operation and the cell-forming operation, and
   the polyol solution, the isocyanate, the blowing agent, the foam stabilizer, and the catalyst are comprised as follows:
   100 parts by weight of the polyol solution, 100 to 120 parts by weight of the isocyanate, 30 parts by weight or less of the blowing agent, 1 to 3 parts by weight of the foam stabilizer, and 1 to 8 parts by weight of the catalyst are comprised based on the 100 parts by weight of the polyol solution.

8. The method according to claim 7, wherein a cream time (CT) is 3 to 10 seconds, and a gel time (GT) is 20 to 60 seconds.

9. The method according to claim 7, wherein a gel time (GT)/ cream time (CT) ratio is 2 to 20.

10. The method according to claim 7, wherein the polyol solution comprises 20 to 80 parts by weight of an aromatic polyol solution and a balance of aliphatic polyols based on the 100 parts by weight of the polyol solution.

11. The method according to claim 7, wherein the blowing agent comprises at least one of cyclopentane (CP), hydrofluoro-olefin (HFO) and hydrofluorocarbon (HFC).

12. The method according to claim 7, wherein the catalyst comprises a foaming catalyst, a gelling catalyst, and a trimerization catalyst.

13. The method according to claim 12, wherein the catalyst comprises 1 to 3 parts by weight of the foaming catalyst, 1 to 3 parts by weight of the gelling catalyst, and a balance of the trimerization catalyst based on the 100 parts by weight of the polyol solution.

**14.** The method according to claim 12, wherein the foaming catalyst comprises at least one of pentamethyl diethylene triamine (PMDETA) and di-(N,N-dimethyl aminoethyl)ether (BDMEE),

the gelling catalyst comprises at least one of triethylamine (TEA), triethylenediamine (TEDA), pentametylenediethylene triamine (PMDETA), dimethylcyclohexyl amine (DMCHA), and tetramethhyl-n-hexyldiamine (TMHDA), and
the trimerization catalyst comprises at least one of potassium otoate and TMR-2.

**15.** A refrigerator comprising:

a cabinet provided at an outermost side of the refrigerator;
a cavity constituting inner walls of the refrigerator; and
a urethane disposed between the cabinet and the cavity, wherein the urethane comprises:

a plurality of closed cells containing inside gas;
a plurality of open cells connected to outside air; and
cell walls disposed
between at least one of the plurality of closed cells and at least one of the plurality of open cells or between the plurality of closed cells to connect the at least one of the plurality of closed cells with the at least one of the plurality of open cells or to connect the plurality of closed cells,
wherein diameters of a closed cell of the plurality of closed cells and an open cell of the plurality of open cells are 100 to 200 μm.

**FIG. 1**

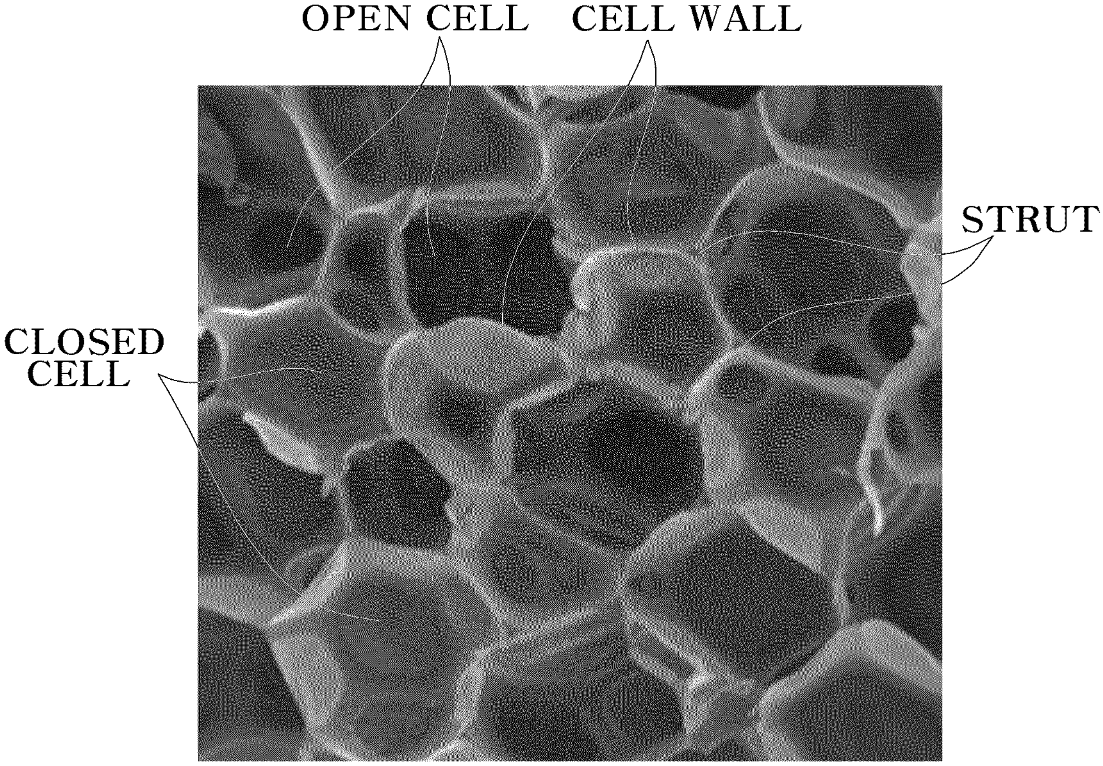

**FIG. 2**

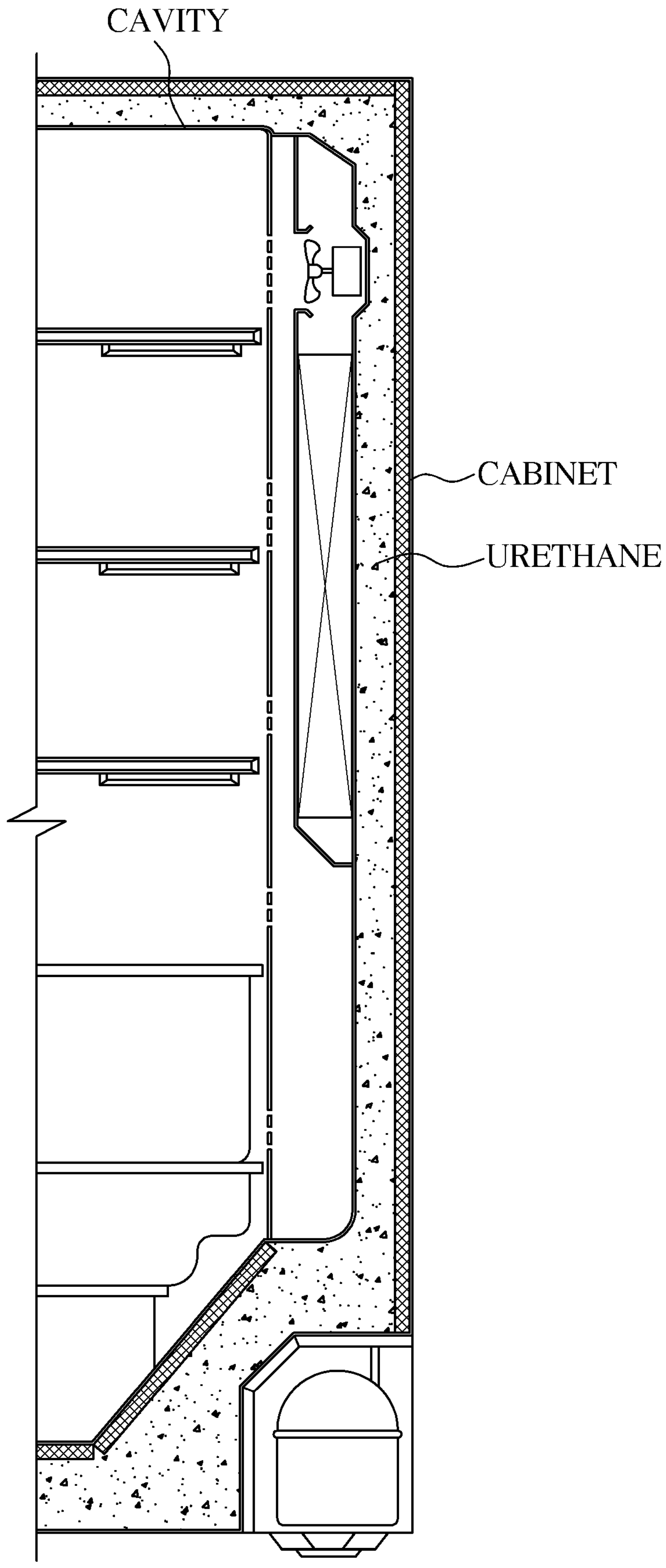

## INTERNATIONAL SEARCH REPORT

International application No.
**PCT/KR2023/007127**

**A. CLASSIFICATION OF SUBJECT MATTER**

**C08G 18/18**(2006.01)i; **F25D 23/06**(2006.01)i; **F25D 23/02**(2006.01)i; **C08J 9/14**(2006.01)i; C08G 101/00(2006.01)n

According to International Patent Classification (IPC) or to both national classification and IPC

**B. FIELDS SEARCHED**

Minimum documentation searched (classification system followed by classification symbols)

C08G 18/18(2006.01); C08G 18/00(2006.01); C08G 18/08(2006.01); C08G 18/09(2006.01); C08J 9/00(2006.01); C08J 9/04(2006.01); C08J 9/06(2006.01); C09K 3/00(2006.01); F25D 23/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 냉장고(refrigerator), 우레탄(urethane), 밀폐 셀(closed cell), 개방 셀(open cell), 셀벽(cell wall), 폴리올(polyol), 이소시아네이트(isocyanate), 발포제(blowing agent), 정포제(surfactant), 거품화 촉매(foaming catalyst), 수지화 촉매(resinification catalyst), 삼량화 촉매(trimerization catalyst)

**C. DOCUMENTS CONSIDERED TO BE RELEVANT**

| Category* | Citation of document, with indication, where appropriate, of the relevant passages | Relevant to claim No. |
|---|---|---|
| X | KR 10-2012-0021979 A (CHEIL INDUSTRIES INC.) 09 March 2012 (2012-03-09) See paragraphs [0002], [0024], [0031], [0037], [0042], [0082]-[0087] and [0113]; claims 1 and 3; and table 3. | 1-3,5-6,15 |
| Y | | 4 |
| A | | 7-14 |
| Y | KR 10-2019-0023085 A (EVONIK DEGUSSA GMBH) 07 March 2019 (2019-03-07) See paragraphs [0009], [0050] and [0055]. | 4 |
| X | JP 2015-199798 A (HITACHI APPLIANCES INC.) 12 November 2015 (2015-11-12) See abstract; and paragraphs [0008], [0019]-[0021] and [0028]-[0035]. | 7-13 |
| Y | | 14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 September 2023** | **12 September 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/007127**

**C. DOCUMENTS CONSIDERED TO BE RELEVANT**

| Category* | Citation of document, with indication, where appropriate, of the relevant passages | Relevant to claim No. |
|---|---|---|
| Y | US 2012-0248371 A1 (ROSS, Michael A. et al.) 04 October 2012 (2012-10-04)<br>See paragraph [0067]. | 14 |
| A | KR 10-2011-0067738 A (KOREA KUMHO PETROCHEMICAL CO., LTD.) 22 June 2011 (2011-06-22)<br>See entire document. | 1-15 |

Form PCT/ISA/210 (second sheet) (July 2022)

**INTERNATIONAL SEARCH REPORT**
**Information on patent family members**

International application No.
**PCT/KR2023/007127**

| Patent document cited in search report | Publication date (day/month/year) | Patent family member(s) | Publication date (day/month/year) |
|---|---|---|---|
| KR 10-2012-0021979 A | 09 March 2012 | CN 103080198 A | 01 May 2013 |
| | | CN 103080198 B | 07 January 2015 |
| | | EP 2610287 A1 | 03 July 2013 |
| | | JP 2013-539492 A | 24 October 2013 |
| | | KR 10-1332433 B1 | 22 November 2013 |
| | | US 2013-0150470 A1 | 13 June 2013 |
| | | US 9045608 B2 | 02 June 2015 |
| | | WO 2012-026654 A1 | 01 March 2012 |
| KR 10-2019-0023085 A | 07 March 2019 | CN 109312097 A | 05 February 2019 |
| | | CN 109312097 B | 24 May 2022 |
| | | EP 3475351 A1 | 01 May 2019 |
| | | EP 3475351 B1 | 21 December 2022 |
| | | JP 2019-518855 A | 04 July 2019 |
| | | JP 6956751 B2 | 02 November 2021 |
| | | KR 10-2383870 B1 | 11 April 2022 |
| | | US 2019-0233571 A1 | 01 August 2019 |
| | | WO 2017-220332 A1 | 28 December 2017 |
| JP 2015-199798 A | 12 November 2015 | None | |
| US 2012-0248371 A1 | 04 October 2012 | CN 105190415 A | 23 December 2015 |
| | | CN 105190415 B | 10 November 2017 |
| | | CN 105579484 A | 11 May 2016 |
| | | CN 105579484 B | 04 June 2019 |
| | | CN 105820369 A | 03 August 2016 |
| | | EP 2718341 A2 | 16 April 2014 |
| | | EP 2961782 A1 | 06 January 2016 |
| | | EP 2961782 B1 | 05 April 2023 |
| | | JP 2014-505782 A | 06 March 2014 |
| | | JP 2014-506947 A | 20 March 2014 |
| | | JP 6573939 B2 | 11 September 2019 |
| | | JP 6594778 B2 | 23 October 2019 |
| | | KR 10-2015-0122171 A | 30 October 2015 |
| | | KR 10-2015-0122171 A | 30 October 2015 |
| | | KR 10-2015-0122209 A | 30 October 2015 |
| | | KR 10-2470287 B1 | 23 November 2022 |
| | | US 2014-0171527 A1 | 19 June 2014 |
| | | US 2015-0344660 A1 | 03 December 2015 |
| | | US 2017-066867 A1 | 09 March 2017 |
| | | US 2018-179358 A1 | 28 June 2018 |
| | | US 9051442 B2 | 09 June 2015 |
| | | US 9556303 B2 | 31 January 2017 |
| | | WO 2012-115929 A2 | 30 August 2012 |
| | | WO 2012-115929 A3 | 28 March 2013 |
| | | WO 2014-133043 A1 | 02 February 2017 |
| | | WO 2014-134087 A1 | 04 September 2014 |
| KR 10-2011-0067738 A | 22 June 2011 | None | |

Form PCT/ISA/210 (patent family annex) (July 2022)